# FASCICULE DE BREVET EUROPEEN

(11) **EP 2 467 346 B1**
(45) Date de publication et mention de la délivrance du brevet: **21.05.2014**
(21) Numéro de dépôt: 10752051.2
(22) Date de dépôt: 20.07.2010
(51) Int. Cl.: C04B 7/32, C04B 28/02, C04B 28/06, C04B 7/345, C04B 28/14

(54) **ADDITIFS POUR LIANT HYDRAULIQUE A BASE DE CLINKER BELITE-CALCIUM-SULPHOALUMINEUX-FERRITE**
ZUSÄTZE FÜR EINEN HYDRAULISCHEN BINDER AUF DER BASIS EINES BELIT-CALCIUM-SULPHOALUMINAT-FERRIT-KLINKERS
ADDITIVES FOR A HYDRAULIC BINDER BASED ON A BELITE-CALCIUM-SULPHOALUMINATE-FERRITE CLINKER

(30) Priorité: 17.08.2009 FR 0903985
(43) Date de publication de la demande: 27.06.2012
(73) Titulaire: Lafarge, 75116 Paris (FR)
(72) Inventeur: WALENTA, Gunther, 69740 Genas (FR); GARTNER, Ellis, 69003 Lyon (FR); MORIN, Vincent, 69003 Lyon (FR)
(74) Mandataire: Berruet, Laure
(86) Numéro de dépôt international: PCT/FR2010/051524
(87) Numéro de publication internationale: WO 2011/020958

(56) Documents cités:
- EP-A1- 1 392 616
- EP-A2- 0 415 799
- DE-A1- 19 501 074
- FR-A1- 2 873 366
- CHEMICAL ABSTRACTS, 15 août 1985 (1985-08-15), XP000184295, ISSN: 0009-2258

## Description

La présente invention se rapporte à une composition comprenant un clinker Belite-Calcium-Sulphoalumineux-Ferrite (clinker BCSAF) avec au moins un acide polycarboxylique ou un de ses sels, à son utilisation pour la préparation de liants hydrauliques, à un ciment comprenant ledit clinker, ainsi qu'a l'utilisation d'acide polycarboxylique ou un de ses sels pour augmenter les résistances mécaniques de liants hydrauliques.

Les clinkers BCSAF sont des clinkers à faible teneur en alite ou absence d'alite, qui est une des phases minéralogiques des clinkers traditionnels du type Portland. L'alite est une forme impure de trisilicate de calcium, Ca₃SiO₅, que l'on écrit sous la forme conventionnelle C₃S.

Pour la suite de l'exposé de l'invention, les notations abrégées suivantes seront utilisées, sauf indication contraire explicite, pour désigner les composants minéralogiques du ciment :
- C représente CaO (chaux),
- A représente Al₂O₃ (alumine),
- F représente Fe₂O₃,
- S représente SiO₂ (silice),
- $ représente SO₃,
- H représente H₂O (eau).

Ces clinkers BCSAF présentent en outre comme avantage de réduire significativement les émissions de CO₂ comparativement à la fabrication des clinkers du type Portland. Des ciments ont été développés par les industriels, à partir de ces clinkers BCSAF, ce sont des ciments BCSAF.

Cependant il est devenu nécessaire de produire des ciments BCSAF à base de clinkers BCSAF dont les résistances mécaniques sont augmentées à quantité de clinker identique.

De plus, il est usuel au cours de la production de ciments BCSAF d'ajouter au clinker BCSAF du calcaire communément appelé filler calcaire (CaCO₃). Ce calcaire permet de réduire la quantité de clinker dans le ciment, et donc de diminuer les émisions de CO₂.

Or le calcaire a pour inconvénient de présenter de faibles propriétés hydrauliques et aussi de freiner l'acquisition de la résistance mécanique du ciment BCSAF après sa prise.

Aussi le problème que se propose de résoudre l'invention est de trouver un moyen pour améliorer l'acquisition des résistances mécaniques après la prise des ciments BCSAF contenant ou non du calcaire.

De manière inattendue, les inventeurs ont mis en évidence qu'il est possible de mélanger au moins un acide polycarboxylique ou un de ses sels avec un clinker BCSAF, tout en conservant et / ou en augmentant les résistances mécaniques, notamment à long terme (28 jours).

Dans ce but la présente invention propose une composition comprenant au moins, en % exprimé en masse par rapport à la masse totale de composition,
- de 0,01 à 3 % d'acide polycarboxylique ou un de ses sels ledit acide polycarboxylique comprenant de 2 à 4 groupes carboxyle par molécule; et
- de 97 à 99,99 % d'un clinker Belite-Calcium-Sulphoalumineux-Ferrite (clinker BCSAF) comprenant au moins en % exprimé en masse par rapport à la masse totale de clinker BCSAF
   ■ de 5 à 30 %, de phase aluminoferrite calcique d'une composition correspondant à la formule générale C₂AₓF(₁₋ₓ), avec X compris de 0,2 à 0,8 ;
   ■ de 10 à 35 %, de phase sulfoaluminate de calcium « ye'elimite » C₄A₃$,
   ■ de 40 à 75 % de bélite (C₂S),
   ■ de 0,01 à 10 % d'une ou plusieurs phases mineures choisies parmi les sulfates de calcium, les sulfates alcalins, la perovskite, la géhlénite, la chaux libre et la périclase, et/ou une phase vitreuse,
   et dont le total des pourcentages de ces phases est supérieur ou égal à 97%.

L'invention a également pour objet un ciment comprenant au moins
- de 30 à 99,9 % d'une composition telle que décrite ci-dessus; et
- de 0,1 à 40 % de sulfate de calcium, % en masse par rapport à la masse totale de ciment;
- de 0,1 à 70 % d'additions minérales, % en masse par rapport à la masse totale de ciment.

L'invention concerne également un béton ou un mortier comprenant au moins un ciment BCSAF et au moins un acide polycarboxylique ou un de ses sels ledit acide polycarboxylique comprenant de 2 à 4 groupes carboxyle par molécule.

L'invention concerne aussi l'utilisation d'au moins un acide polycarboxylique ou un de ses sels ledit acide polycarboxylique comprenant de 2 à 4 groupes carboxyle par molécule pour augmenter la résistance mécanique des ciments BCSAF après leur prise.

Enfin l'invention a également pour objet un procédé de préparation d'un béton ou d'un mortier comprenant une étape de mélange d'un ciment BCSAF avec des granulats, de l'eau, au moins un acide polycarboxylique ou un de ses sels ledit acide polycarboxylique comprenant de 2 à 4 groupes carboxyle par molécule, et éventuellement des additifs.

L'invention offre au moins un des avantages déterminants décrits ci-après.

Avantageusement, les ciments selon l'invention présentent des résistances mécaniques élevée à long terme, en particulier après 28 jours.

L'invention offre comme avantage que le clinker BCSAF peut être mélangé avec du calcaire afin de réduire la quantité de clinker dans le ciment, sans freiner l'acquisition des résistances mécaniques, ou sans perdre les résistances mécaniques du ciment après sa prise.

L'invention offre comme autre avantage que l'acide polycarboxylique utilisé selon l'invention permet en outre de fluidifier la pâte de ciment BCSAF.

L'invention offre comme autre avantage que les compositions selon l'invention satisfont ou surpassent les performances requises dans les applications des bétons modernes actuels.

Enfin l'invention a pour avantage de pouvoir être mise en oeuvre dans toutes industries, notamment l'industrie du bâtiment, l'industrie cimentière, et dans l'ensemble des marchés de la construction (bâtiment, génie civil ou usine de préfabrication).

D'autres avantages et caractéristiques de l'invention apparaîtront clairement à la lecture de la description et des exemples donnés à titre purement illustratifs et non limitatifs qui vont suivre.

Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique selon l'invention peut en particulier être un ciment.

Par le terme « béton », on entend un mélange de liants hydrauliques, de granulats, d'eau, éventuellement d'additifs, et éventuellement d'additions minérales comme par exemple le béton hautes performances, le béton très hautes performances, le béton autoplaçant, le béton autonivelant, le béton autocompactant, le béton fibré, le béton prêt à l'emploi ou le béton coloré. Par le terme « béton », on entend également les bétons ayant subi une opération de finition telle que le béton bouchardé, le béton désactivé ou lavé, ou le béton poli. On entend également selon cette définition le béton précontraint. Le terme « béton » comprend les mortiers, dans ce cas précis le béton comprend un mélange de liant hydraulique, de sable, d'eau et éventuellement d'additifs et éventuellement d'additions minérales. Le terme « béton » selon l'invention désigne indistinctement le béton frais ou le béton durci.

Par le terme « granulats », on entend selon l'invention un matériau granulaire utilisé dans la construction qui peut être naturel, artificiel ou recyclé tel que défini dans la norme française XP P18-545 . A titre d'exemple de granulats, on peut citer des graviers, des gravillons du sable, des granulats légers et / ou des granulats artificiels.

Par l'expression « additions minérales», on entend selon l'invention les laitiers (tels que définis dans la norme « Ciment » NF EN 197-1 paragraphe 5.2.2), les laitiers d'aciérie, les matériaux pouzzolaniques (tels que définis dans la norme « Ciment » NF EN 197-1 paragraphe 5.2.3), les cendres volantes (telles que définies dans la norme « Ciment » NF EN 197-1 paragraphe 5.2.4), les schistes calcinés (tels que définis dans la norme « Ciment » NF EN 197-1 paragraphe 5.2.5), les calcaires (tels que définis dans la norme « Ciment » NF EN 197-1 paragraphe 5.2.6) ou encore les fumées de silices (telles que définies dans la norme « Ciment » NF EN 197-1 paragraphe 5.2.7) ou leurs mélanges.

Par le terme « clinker », on entend selon l'invention le produit obtenu après cuisson (la clinkerisation) d'un mélange (le cru) composé, entre autres par exemple de calcaire et par exemple d'argile.

Par l'expression « ciment Portland », on entend selon l'invention un ciment de type CEM I, CEM II, CEM III, CEM IV ou CEM V selon la la norme « Ciment » NF EN 197-1.

Par l'expression « clinker Portland », on entend selon l'invention un clinker tel que défini dans la norme « Ciment » NF EN 197-1.

Par l'abréviation «BCSAF», on entend selon l'invention Belite-Calcium-Sulphoalumineux-Ferrite.

Par l'expression « ciment BCSAF », on entend selon l'invention un ciment comprenant au moins un clinker BCSAF et au moins une source de sulfate de calcium.

Par le terme « clinker BCASF », on entend selon l'invention un clinker qui peut être obtenu selon le procédé décrit dans la demande WO 2006/018569 ou encore un clinker comprenant au moins en % exprimé en masse par rapport à la masse totale de clinker BCSAF
■ de 5 à 30 %, de phase aluminoferrite calcique d'une composition correspondant à la formule générale C₂AₓF(₁₋ₓ), avec X compris de 0,2 à 0,8 ;
■ de 10 à 35 %, de phase sulfoaluminate de calcium « ye'elimite » C₄A₃$,
■ de 40 à 75 % de bélite (C₂S),
■ de 0,01 à 10 % d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%.

Par le terme « phase », on entend selon l'invention une phase minéralogique.

Par le terme « élément », on entend selon l'invention un élément chimique selon le tableau périodique des éléments.

Par les termes suivants, on entend selon la présente invention :
- C₃S: Silicate tricalcique impur (Ca₃SiO₅): (Alite) 3(CaO)•(SiO₂)
- C₂S: Silicate bicalcique impur (Ca₂SiO₄) : (Belite) 2(CaO)•(SiO₂)
- C₃A: Aluminate tricalcique (Ca₃Al₂O₆) : (Aluminate) 3(CaO)•(Al₂O₃)
- C₄AF: Ferro-aluminate tétracalcique (Ca₄Al₂Fe₂O₁₀) : (Ferrite ou aluminoferrite ou brownmillerite) 4(CaO)•(Al₂O₃)•(Fe_{2O3}), ou plus généralement un composé de formule générale 2(CaO)•x(Al₂O₃)•(1-x)(Fe₂O₃) avec X de 0,2 à 0,8
- C₄A₃$, : sulfoaluminate de calcium « ye'elimite » 4(CaO)•3(Al₂O₃) •(SO₃)
- Calcaire (limestone) : CaCO₃
- Gypse : CaSO₄•2(H₂O);
- Sulfate de calcium semihydrate (plâtre) : CaSO₄•0.5H_{2O} ;
- Sulfate de calcium anhydre (anhydrite) : CaSO₄;
- Périclase : MgO ;
- Silice ou quartz : SiO₂.

Par le terme «argile», on entend selon la présente invention une roche sédimentaire, composée pour une large part de minéraux spécifiques, silicates en général d'aluminium plus ou moins hydratés, qui présentent une structure feuilletée (phyllosilicates), ou bien une structure fibreuse (sépiolite et palygorskite).

Par le terme « prise », on entend selon la présente invention le passage à l'état solide par réaction chimique d'hydratation du liant hydraulique. La prise est généralement suivi par la période de durcissement.

Par le terme « durcissement», on entend selon la présente invention l'acquisition des propriétés mécaniques d'un liant hydraulique, après la fin de la prise.

Par l'expression « éléments pour le domaine de la construction », on entend selon la présente invention tout élément constitutif d'une construction comme par exemple un sol, une chape, une fondation, un mur, une cloison, un plafond, une poutre, un plan de travail, un pilier, une pile de pont, un parpaing, un tuyau, un poteau, une corniche, un élément de voirie (par exemple une bordure de trottoir), une tuile, un élément d'assainissement.

Tout d'abord la présente invention a pour objet une composition comprenant au moins, en % exprimé en masse par rapport à la masse totale de composition,
- de 0,01 à 3 % d'acide polycarboxylique ou un de ses sels ledit acide polycarboxylique comprenant de 2 à 4 groupes carboxyle par molécule; et
- de 97 à 99,99 % d'un clinker Belite-Calcium-Sulphoalumineux-Ferrite (clinker BCSAF) comprenant au moins en % exprimé en masse par rapport à la masse totale de clinker BCSAF
   ■de 5 à 30 %, de phase aluminoferrite calcique d'une composition correspondant à la formule générale C₂AₓF(₁₋ₓ), avec X compris de 0,2 à 0,8 ;
   ■ de 10 à 35 %, de phase sulfoaluminate de calcium « ye'elimite » C₄A₃$,
   ■ de 40 à 75 % de bélite (C₂S),
   ■ de 0,01 à 10 % d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%, de préférence supérieur ou égal à 98 %, plus préférentiellement supérieur ou égal à 99 %, encore plus préférentiellement égal à 100%,

La bélite est une phase minéralogique bien connue de l'homme du métier, qui à l'état pur possède la composition Ca₂SiO₄ mais qui peut aussi contenir des impuretés.

La « ye'elimite » est une phase minéralogique qui à l'état pur possède la composition Ca₄Al₆SO₁₆ mais qui peut aussi contenir des impuretés.

La phase aluminoferrite est une phase minéralogique qui à l'état pur possède la formule C₂AₓF₍₁₋ₓ₎, avec X compris de 0,2 à 0,8 mais qui peut aussi contenir des impuretés.

Par impureté, on entend n'importe quel élément de la classification périodique des éléments.

De préférence, les phases minéralogiques du clinker BCSAF de la composition selon l'invention comprennent en outre un ou plusieurs éléments secondaires choisis parmi le magnésium, le sodium, le potassium, le bore, le phosphore, le zinc, le manganèse, le titane, le fluor, le chlore.

De préférence, la composition selon l'invention comprend de 0,01 à 3 % d'acide polycarboxylique, plus préférentiellement de 0,03 à 1 %, encore plus préférentiellement de 0,1 à 0,5 %, % en masse par rapport à la masse totale de composition.

Avantageusement, la composition selon l'invention comprend au moins un acide polycarboxylique ou un de ses sels choisi parmi l'acide citrique, l'acide malonique, l'acide malique, l'acide glutarique, l'acide adipique, l'acide oxalique, l'acide maléique, l'acide tartrique, l'acide succinique, l'acide ascorbique, l'acide glutamique ou leurs mélanges.

De préférence, la composition selon l'invention comprend au moins un acide polyéarboxylique ou un de ses sels choisi parmi l'acide citrique, l'acide malique, l'acide ascorbique, l'acide oxalique, l'acide succinique ou leurs mélanges.

Encore plus préférentiellement, la composition selon l'invention comprend au moins un acide citrique ou un de ses sels.

Avantageusement, la composition selon l'invention comprend en outre une alkanolamine.

De préférence, la composition selon l'invention comprend en outre une alkanolamine choisi parmi la triethanolamine (TEA), la diethanolamine (DEA), la tetrakis-hydroxy-ethyl-ethylene-diamine (THEED), ou la methyl-diethanolamine (MDEA).

Encore plus préférentiellement, la composition selon l'invention comprend en outre la diethanolamine ou la methyl-diethanolamine.

De préférence, la composition selon l'invention comprend de 97 à 99,99 % d'un clinker BCSAF, plus préférentiellement de 99 à 99,97 %, encore plus préférentiellement 99,5 à 99,9 %, % en masse par rapport à la masse totale de composition.

De préférence, la composition selon l'invention comprend un clinker Belite-Calcium-Sulphoalumineux-Ferrite (clinker BCSAF) comprenant au moins en % exprimé en masse par rapport à la masse totale de clinker BCSAF dans la composition
- de 10 à 25 %, de phase aluminoferrite calcique d'une composition correspondant à la formule générale C₂AₓF₍₁₋ₓ₎, avec X compris de 0,2 à 0,8 ;
- de 15 à 30%, de phase sulfoaluminate de calcium « ye'elimite » C₄A₃$,
- de 45 à 70 % de bélite (C₂S),
- de 0,01 à 10 % d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%, de préférence supérieur ou égal à 98 %, plus préférentiellement supérieur ou égal à 99 %, encore plus préférentiellement égal à 100%.

Plus préférenciellement, la composition selon l'invention comprend un clinker Belite-Calcium-Sulphoalumineux-Ferrite (clinker BCSAF) comprenant, en % exprimé en masse par rapport à la masse totale de clinker BCSAF dans la composition, au moins
- de 15 à 25 %, de phase aluminoferrite calcique d'une composition correspondant à la formule générale C₂AₓF₍₁₋ₓ₎, avec X compris de 0,2 à 0,8 ;
- de 20 à 30 %, de phase sulfoaluminate de calcium « ye'elimite » C₄A₃$,
- de 45 à 60 % de bélite (C₂S),
- de 0,01 à 10 % d'une ou plusieurs phases mineures choisies parmi les sulfates de calcium, les sulfates alcalins, la perovskite, la géhlénite, la chaux libre et la périclase, et/ou une phase vitreuse,
   et dont le total des pourcentages de ces phases est supérieur ou égal à 97%, de préférence supérieur ou égal à 98 %, plus préférentiellement supérieur ou égal à 99 %, encore plus préférentiellement égal à 100%,
- et en ce qu'il contient un ou plusieurs éléments secondaires choisis parmi le soufre, le magnésium, le sodium, le potassium, le bore, le phosphore, le zinc, le manganèse, le titane, le fluor, le chlore, l'aluminium.

Les phases minéralogiques du clinker BCSAF de la composition selon l'invention peuvent comprendre comme éléments majeurs le calcium, l'aluminium, la silice, le fer, l'oxygène et le soufre.

Le clinker BCSAF de la composition selon l'invention peut comprendre au moins les oxydes principaux suivants présents dans les proportions relatives, % exprimées en masse par rapport à la masse totale de clinker BCSAF:
CaO : 45 à 61 %
Al2O3 : 8 à 22 %
SiO2 : 15 à 25 %
Fe2O3 : 3 à 15 %
SO₃ : 2 à 10 %.

Les phases minéralogiques du clinker BCSAF de la composition selon l'invention peuvent comprendre de un à plusieurs éléments secondaires, en % exprimé en masse par rapport à la masse totale de clinker BCSAF dans la composition, choisis parmi le magnésium, le sodium, le potassium, le bore, le phosphore, le zinc, le manganèse, le titane, le fluore, le chlore, présents préférentiellement dans les quantités suivantes:
- de 0 à 5 % de magnésium exprimé en oxyde de magnésium,
- de 0 à 5 % de sodium exprimé en oxyde de sodium,
- de 0 à 5 % de potassium exprimé en oxyde de potassium,
- de 0 à 3 % de bore exprimé en oxyde de bore,
- de 0 à 7 % de phosphore exprimé en anhydride phosphorique,
- de 0 à 5 % de zinc, manganèse, titane ou leur mélange, exprimé en oxydes de ces éléments,
- de 0 à 3 % de fluorure, de chlorure, ou leur mélange, exprimé en fluorure de calcium et chlorure de calcium,
la teneur totale desdits éléments secondaires étant inférieure ou égale à 15%.

Les phases minéralogiques du clinker BCSAF de la composition selon l'invention peuvent comprendre, en % exprimé en masse par rapport à la masse totale de clinker BCSAF dans la composition, de manière préférentielle les éléments secondaires suivants :
- de 1 à 4 % de magnésium exprimé en oxyde de magnésium,
- de 0,1 à 2 % de sodium exprimé en oxyde de sodium,
- de 0,1 à 2 % de potassium exprimé en oxyde de potassium,
- de 0 à 2 % de bore exprimé en oxyde de bore,
- de 0 à 4 % de phosphore exprimé en anhydride phosphorique,
- de 0 à 3 % de zinc, manganèse, titane ou leur mélange, exprimé en oxydes de ces éléments,
- de 0 à 1 % de fluorure, de chlorure, ou leur mélange, exprimé en fluorure de calcium et chlorure de calcium.

Les phases minéralogiques du clinker BCSAF de la composition selon l'invention peuvent comprendre, en % exprimé en masse par rapport à la masse totale de clinker BCSAF dans la composition, de manière préférentielle les éléments secondaires suivants :
- de 0,2 à 1,5 % de sodium exprimé en oxyde de sodium,
- de 0,2 à 1,5 % de potassium exprimé en oxyde de potassium,
- de 0,2 à 2 % de bore exprimé en oxyde de bore,
- de 0 à 1 % de fluorure plus chlorure, ou leur mélange, exprimé en fluorure de calcium et chlorure de calcium.

De manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2 % de bore exprimé en oxyde de bore ;
- de 0,1 à 2 % de potassium exprimé en oxyde de potassium.

D'une autre manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2 % de bore exprimé en oxyde de bore ;
- de 0,1 à 2 % de sodium exprimé en oxyde de sodium.

D'une autre manière préférentielle, les phases minéralogiques du clinker BCSAF de la composition selon l'invention peuvent comprendre, en % exprimé en masse par rapport à la masse totale de clinker BCSAF dans la composition, l'élément secondaire suivant :
- de 0,2 à 2 % de bore exprimé en oxyde de bore.

D'une autre manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2 % de potassium exprimé en oxyde de potassium;
- de 0,5 à 4 % de phosphore exprimé en oxyde de phosphore (P₂O₅).

D'une autre manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2 % de potassium exprimé en oxyde de potassium;
- de 0,5 à 4 % de phosphore exprimé en oxyde de phosphore (P₂O₅) ;
- moins de 0,1 % de bore exprimé en oxyde de bore.

Une source de bore convenant selon l'invention est par exemple le borax, l'acide borique ou tout autres composé contenant du bore; la source de bore peut provenir de carrières ou résulter d'un procédé industriel.

Selon une variante de l'invention, le clinker BCSAF ne comprend pas de borax, ou de bore ou de composé comprenant du bore.

De préférence la composition selon l'invention comprend, le sodium et le potassium en tant qu'éléments secondaires.

De préférence le clinker BCSAF de la composition selon l'invention ne comprend pas de phase minéralogique C₃S.

Un autre objet de l'invention est de proposer un procédé de fabrication d'une composition selon l'invention comprenant une étape de mise en contact d'au moins un acide polycarboxylique ou un de ses sels avec du clinker BCSAF. Ce procédé de fabrication d'une composition selon l'invention peut comprendre événtuellement une étape de broyage et/ou d'homogénéisation.

Le clinker Belite-Calcium-Sulphoalumineux-Ferrite (clinker BCSAF) de la composition selon l'invention peut être obtenu selon le procédé décrit dans la demande WO 2006/018569 ou encore le clinker BCSAF peut être le même que celui décrit dans la demande WO 2006/018569.

Le clinker BCSAF de la composition selon l'invention peut être réalisé selon d'autres procédés et notamment de la manière suivante :
a) préparer un cru comprenant une matière première ou un mélange de matières premières capable par clinkérisation de fournir les phases C₂AₓF₍₁₋ₓ₎, avec X compris entre 0,2 et 0,8, phase C₄A₃$, et phase C₂S dans les proportions requises;
b) ajouter et mélanger au cru obtenu à l'étape a) au moins un additif d'apport d'élément secondaire choisi parmi le magnésium, le sodium, le potassium, le bore, le phosphore, le zinc, le manganèse, le titane, le fluor, le chlore ou leurs mélanges, en une quantité calculée pour que, après clinkérisation, la quantité correspondante d'éléments secondaires, exprimée comme indiquée ci-dessus, soit inférieure ou égale à 20 % en poids par rapport au poids total du clinker ; et
c) calciner le mélange obtenu à l'étape b) à une température comprise de 1150°C à 1400°C, de préférence de 1200°C à 1325°C, pendant au minimum 15 minutes en atmosphère suffisamment oxydante pour éviter la réduction du sulfate de calcium en dioxyde de soufre.

De préférence, les matière premières pouvant convenir pour réaliser l'étape a) sont :
- une source de silice comme par exemple un sable, une argile, une marne, les cendres volantes, les cendres de combustion du charbon, une pouzzolane, une fumée de silice ; la source de silice peut provenir de carrières ou résulter d'un procédé industriel ;
- une source de calcium comme par exemple le calcaire, la marne, les cendres volantes, les cendres de combustion du charbon, les laitiers, les pouzolanes, les résidus de calcination des ordures ménagères ; la source de calcium peut provenir de carrières ou résulter d'un procédé industriel ;
- une source d'alumine comme par exemple une argile, une marne, les cendres volantes, les cendres de combustion du charbon, une pouzolane, une bauxite, une boue rouge d'alumine notamment une boue d'alumine provenant de déchets industriels au cours de l'extraction de l'alumine, les latérites, les anorthosites, les albites, les feldspaths ; la source d'alumine peut provenir de carrières ou résulter d'un procédé industriel ;
- une source de fer comme par exemple l'oxyde de fer, les latérites, les laitiers d'acieries, le minerai de fer ; la source de fer peut provenir de carrières ou résulter d'un procédé industriel ;
- une source de sulfate de calcium comme par exemple du gypse, du sulfate de calcium hémihydraté (α ou β), ou encore du sulfate de calcium anhydre ; les sources de sulfate de calcium convenant selon l'invention peuvent provenir de carrière, ou résultant d'un procédé industriel.

La préparation du cru à l'étape a) peut être réalisée par mélange des matières premières. Les matières premières peuvent être mélangées à l'étape a) par mise en contact, comprenant événtuellement une étape de broyage et/ou d'homogénéisation. De préférence, les matières premières de l'étape a) sont événtuellement séchées avant l'étape a) ou encore événtuellement calcinées avant l'étape a).

Les matières premières peuvent être ajoutées séquentiellement, soit dans l'entrée principale du four, et/ou soit dans d'autres entrées du four.

De plus les résidus de combustion peuvent aussi être intégrés dans le four

Les matière premières pouvant convenir pour réaliser l'étape b) sont :
- une source de bore comme par exemple le borax, l'acide borique, le colémanite ou tout autres composé contenant du bore; la source de bore peut provenir de carrières ou résulter d'un procédé industriel ;
- une source de magnésium comme par exemple un sel de magnésium ;
- une source de sodium comme par exemple un sel de sodium ;
- une source de potassium comme par exemple un sel de potassium ;
- une source de phosphore comme par exemple un sel de phosphore ;
- une source de zinc comme par exemple l'oxyde de zinc ;
- une source de manganèse comme par exemple l'oxyde de manganèse ;
- une source de titane comme par exemple l'oxyde de titane ;
- une source de fluor comme par exemple les sels de fluor ;
- une source de chlore comme par exemple les sels de chlore ;
ou leurs mélanges.

Les matières premières pouvant convenir pour réaliser l'étape b) sont sous forme soit de poudre, soit de semi-solide, soit de liquide, ou soit de solide.

L'étape c) est une étape de calcination (clinkerisation), ce qui signifie au sens de l'invention une étape de cuisson. Par calcination, on entend au sens de l'invention la réaction entre les éléments chimique de l'étape b) qui conduit à la formation des phases minéralogiques du clinker BCSAF. Cette étape peut se réaliser dans un four de cimenterie conventionnel (par exemple un four rotatif) ou dans un autre type de four (par exemple un four à passage).

De préférence, la calcination a lieu pendant au minimum 20 minutes, plus préférentiellement pendant au minimum 30 minutes, encore plus préférentiellement pendant au minimum 45 minutes.

Par atmosphère suffisamment oxydante, on entend par exemple l'air atmosphérique, mais d'autres atmosphères suffisamment oxydante peuvent convenir.

L'invention a également pour objet un ciment comprenant au moins
- de 30 à 99,9 % d'une composition selon l'invention; et
- de 0,1 à 40 % de sulfate de calcium, % en masse par rapport à la masse totale de ciment;
- de 0,1 à 70 % d'additions minérales, % en masse par rapport à la masse totale de ciment.

De préférence le ciment selon l'invention comprend de 0,1 à 40 %, plus préférentiellement de 0,1 à 20 %, encore plus préférentiellement de 0,1 à 10 % de sulfate de calcium, % en masse par rapport à la masse totale de ciment.

Le sulfate de calcium convenant selon l'invention est de préférence du gypse naturelle ou synthétique, du sulfate de calcium semihydraté (α ou β), ou encore du sulfate de calcium anhydre. Les sulfates de calcium convenant selon l'invention peuvent provenir de carrière, ou résultant d'un procédé industriel.

De préférence le ciment selon l'invention comprend de 0,1 à 70 % d'additions minérales, plus préférentiellement de 0,1 à 50 % d'additions minérales, encore plus préférentiellement de 0,1 à 30 % d'additions minérales, % en masse par rapport à la masse totale de ciment.

Selon un mode préférentiel, le ciment selon l'invention comprend au moins des additions minérales choisies parmi les laitiers (tels que définis dans la norme « Ciment » NF EN 197-1 paragraphe 5.2.2), les laitiers d'aciérie, les matériaux pouzzolaniques (tels que définis dans la norme « Ciment » NF EN 197-1 paragraphe 5.2.3), les cendres volantes (telles que définies dans la norme « Ciment » NF EN 197-1 paragraphe 5.2.4) ou les calcaires (tels que définis dans la norme « Ciment » NF EN 197-1 paragraphe 5.2.6), ou leurs mélanges.

Selon une variante de l'invention, les additions minérales préférées sont les calcaires.

L'ajout d'additions minérales peut se faire par homogénéisation ou par co-broyage.

Selon une variante, le ciment selon l'invention peut comprendre au moins un clinker Portland ou un ciment Portland du type CEM I, CEM II, CEM III, CEM IV ou CEM V.

Selon une variante, le ciment selon l'invention peut comprendre des agents retardant ou accélérant la prise.

Selon une variante, le ciment selon de l'invention peut être obtenu par co-broyage de la composition selon l'invention avec la quantité adéquate de gypse ou d'autres formes de sulfate de calcium déterminées par essais ou calcul et avec événtuellement la quantité adéquate d'additions minérales, notamment du calcaire.

L'invention a également pour objet un béton ou un mortier comprenant au moins un ciment BCSAF et au moins un acide polycarboxylique ou un de ses sels ledit acide polycarboxylique comprenant de 2 à 4 groupes carboxyle par molécule. Ce béton selon une variante de l'invention peut être obtenu par mise en contact du ciment BCSAF avec des granulats, de l'eau, et éventuellement des additifs et/ou des additions minérales, l'eau pouvant contenir l'acide carboxylique ou ses sels. Selon ce béton, l'acide carboxylique est présent dans l'eau de gâchage ou peut être présent avec les granulats ou encore peut être présent avec les additions minérales, notamment avec le calcaire.

L'invention a également pour objet un béton ou un mortier comprenant au moins un ciment selon l'invention. Selon ce béton, l'acide polycarboxylique est présent avec le ciment selon l'invention.

L'invention a aussi pour objet l'utilisation d'au moins un acide polycarboxylique ou un de ses sels ledit acide polycarboxylique comprenant de 2 à 4 groupes carboxyle par molécule pour augmenter la résistance mécanique des ciments BCSAF après leur prise.

L'acide polycarboxylique ou un de ses sels utilisé selon l'invention peut être mis en contact directement avec l'eau de gâchage, avec les granulats, ou les additions minérales ou le ciment.

Selon une variante de l'utilisation selon l'invention, ledit acide est présent dans l'eau de gâchage du ciment BCSAF.

Selon une variante de l'utilisation selon l'invention, ledit acide est présent avec les granulats ou les sables.

L'invention a également pour objet un procédé de préparation d'un béton ou d'un mortier selon l'invention comprenant une étape de mélange d'un ciment selon l'invention avec des granulats, de l'eau et éventuellement des additifs.

L'invention a également pour objet un procédé de préparation d'un béton ou d'un mortier selon comprenant une étape de mélange d'un ciment BCSAF avec des granulats, de l'eau, au moins un acide polycarboxylique ou un de ses sels ledit acide polycarboxylique comprenant de 2 à 4 groupes carboxyle par molécule, et éventuellement des additifs et/ou des addition minérales.

L'invention a également pour objet des éléments pour le domaine de la construction réalisés en utilisant le béton ou le mortier selon l'invention ou le ciment selon l'invention.

Les exemples suivants illustrent l'invention sans en limiter la portée.

### EXEMPLES

### Matériaux :

Le Clinker BCSAF est obtenu à partir de calcaire, d'argile kaolinite, de sulfate de calcium, d'oxyde de fer, dont les compositions chimiques sont indiquées dans le tableau I ci-dessous et exprimées en % en masse par rapport à la masse totale :

**Tableau I**

| Composition en (%) | Calcaire | Argile kaolinite | Bauxite | Anhydrite (sulfate de calcium anhydre) | Oxyde de fer |
|---|---|---|---|---|---|
| SiO2 tot. | 0.12 | 47.76 | 6.88 | 0.36 | 1.89 |
| Al2O3 | 0.14 | 35.36 | 85.11 | 0.18 | 0.00 |
| Fe2O3 | 0.09 | 1.34 | 1.85 | 0.12 | 95.30 |
| CaO | 55.34 | 0.73 | 0.46 | 40.80 | 0.00 |
| MgO | 0.19 | 0.27 | 0.18 | 0.00 | 0.03 |
| SO3 | 0.03 | 0.05 | 0.00 | 56.84 | 0.00 |
| Perte au feu | 44.06 | 12.04 | 0.46 | 1.70 | 2.00 |
| P2O5 | 0.00 | 0.00 | 0.01 | 0.00 | 0.06 |
| TiO2 | 0.00 | 0.05 | 4.13 | 0.00 | 0.05 |
| Mn2O3 | 0.00 | 0.00 | 0.00 | 0.00 | 0.67 |
| K20 tot. | 0.02 | 2.21 | 0.79 | 0.00 | 0.00 |
| Na20 tot. | 0.01 | 0.19 | 0.13 | 0.00 | 0.00 |

### Réalisation d'un clinker BCSAF :

Préparation des matières premières : Les matières premières sont préalablement broyées individuellement de façon à vérifier les caractéristiques suivantes :
- 0 % de refus à 200µm
- 10 % de refus maximum à 100µm.

Pesées, mélanges et homogénéisation des matières premières : Préparation du cru selon l'étape a) du procédé selon l'invention. Les pesées sont réalisées selon les proportions définies ci-après dans le tableau II et exprimées en % en masse par rapport à la masse totale du cru :

**Tableau II**

| % | Calcaire | Argile kaolinite | Bauxite | Anhydrite | Oxyde de fer |
|---|---|---|---|---|---|
| Cru BCSAF | 61.36 | 24.80 | 3.35 | 5.47 | 5.02 |

Le mélange de ces constituants est effectué après pesée des différents produits selon la séquence suivante :
- mélange manuel grossier en agitant le sac plastique contenant l'ensemble des constituants ;
- passage au tourne-jarre durant 4 h avec un mélange : 2Kg de matière + 2 Kg d'eau déminéralisée
- séchage à l'étuve pendant une nuit à 110°C
- introduction de 26,59g de Borax pour 1000g de cru obtenu à l'étape a) et homogénéisation par passage au mélangeur de type Eirich pendant 3 minutes.

Granulation : Après obtention du cru conforme à l'étape a) du procédé selon l'invention, celui-ci subit une opération de granulation afin d'obtenir des tailles de granules d'environ 1 cm de diamètre.

Cuisson : Détail de la procédure suivie pour les cuissons de clinkers BCSAF :
- remplissage de 4 creusets avec 1 kg de cru conforme à l'étape a) du procédé selon l'invention ;
- introduction des 4 creusets pleins (soit environ 4x250 g de cru) dans le four, sans couvercle ;
- Montée en température selon une rampe de température n°1 : 1000°C/h jusqu'à 975°C
- palier à 975°C pendant 1 H ;
- mise en place des couvercles sur les creusets ;
- rampe de température n°2 : 300°C/h jusqu'à 1350°C ;
- palier à 1350°C pendant 30 minutes puis vidage des creusets et trempe à l'air dans des bacs en acier.

Un clinker BCSAF est obtenu dont la surface spécifique Blaine est de 4000 cm²/g.

### Réalisation d'un liant selon l'invention :

Les proportions définies ci-après dans les tableaux III et IV ci-dessous indique les proportions des constituants des liants réalisés selon l'invention.

Le sulfate de calcium est un sulfate de calcium anhydrite (AH) broyé provenant de l'usine Le Pin (France) de granulométrie inférieur ou égale à 100 µm. Le pourcentage de sulfate de calcium, est exprimé en masse par rapport à la masse totale du clinker BCSAF.

**Tableaux III**

| | **Sulfate de calcium** | **Filler calcaire** | **Additif** |
|---|---|---|---|
| Témoin 1 | 3.5 % AH le Pin | 0% | 0% |
| Liant 1 | 3.5 % AH le Pin | 0% | 0.3% acide succinique / ciment |
| Liant 2 | 3.5 % AH le Pin | 0% | 0.3% acide ascorbique / ciment |
| Liant 3 | 3.5 % AH le Pin | 0% | 0.3% acide oxalique / ciment |
| Liant 4 | 3.5 % AH le Pin | 0% | 0.3% acide citrique / ciment |
| Liant 5 | 3.5 % AH le Pin | 0% | 0.3% acide malique / ciment |

| | | | |
|---|---|---|---|
| Le pourcentage des additifs (acides) sont exprimés en masse par rapport à la masse totale du ciment. | | | |

**Tableaux IV**

| | **Sulfate de calcium** | **Filler calcaire** | **Additif N°1** | **Additif N°2** |
|---|---|---|---|---|
| Témoin 2 | 3.5 % AH le Pin | 25% en substitution au ciment | 0% | 0% |
| Liant 6 | 3.5 % AH le Pin | 25% en substitution au ciment | 0.225% acide oxalique | 0% |
| Liant 7 | 3.5 % AH le Pin | 25% en substitution au ciment | 0.225% acide succinique | 0% |
| Liant 8 | 3.5 % AH le Pin | 25% en substitution au ciment | 0.225% acide malique | 0% |
| Liant 9 | 3.5 % AH le Pin | 25% en substitution au ciment | 0.225% acide ascorbique | 0% |
| Liant 10 | 3.5 % AH le Pin | 25% en substitution au ciment | 0.225% acide citrique | 0% |
| Liant 11 | 3.5 % AH le Pin | 25% en substitution au ciment | 0.225% acide citrique | 0.1 % DEA |
| Liant 12 | 3.5 % AH le Pin | 25% en substitution au ciment | 0.225% acide citrique | 0.1 % MDEA |

| | | | | |
|---|---|---|---|---|
| Le pourcentage de filler calcaire, est exprimé en masse par rapport à la masse totale de ciment BCSAF + Filler calcaire. Le pourcentage des additifs (acides et alkanolamines) sont exprimés en masse par rapport à la masse totale du liant. | | | | |

### Réalisation d'un mortier selon l'invention :

Le mortier est été réalisé selon la norme EN 196-1.

Quantités de matières utilisées pour réaliser un mortier :
- 450 g de liant
- 1350 g de sable normalisé
- 225 g d'eau.

Pour la préparation du liant, toutes les matières sont mélangées à l'aide d'un mélangeur Turbula pendant 30 minutes puis le protocole de gâchage respecte la norme EN196-1.

Le mortier est ensuite coulé dans des moules aciers puis ces moules sont placés dans une armoire à hygrométrie contrôlée (> 97 %). Après 1 jour d'hydratation du mortier, les prismes de mortier sont démoulés et immergés dans l'eau à 20 °C jusqu'à l'échéance de casse.

Les résistances mécaniques en compression mesurées à 28 jours selon la norme EN 196-1 sont indiqué dans les tableaux V et VI ci-dessous. Pour chaque mortier, un mortier témoin ne comprenant pas d'acide polycarboxylique est réalisé.

**Tableau V**

| | **Rc à 28 jours** |
|---|---|
| Témoin 1 | 50 MPa |
| Liant 1 | 56.8 MPa |
| Liant 2 | 59,3 MPa |
| Liant 3 | 59,9 MPa |
| Liant 4 | 62.3 MPa |
| Liant 5 | 63.5 MPa |

**Tableau VI**

| | **Rc à 28 jours** |
|---|---|
| Témoin 2 | 21 MPa |
| Liant 6 | 23.7 MPa |
| Liant 7 | 26.1 MPa |
| Liant 8 | 28.6 MPa |
| Liant 9 | 28.8 MPa |
| Liant 10 | 35.7 MPa |
| Liant 11 | 43.2 MPa |
| Liant 12 | 44.7 MPa |

## Revendications

1. Composition comprenant au moins, en % exprimé en masse par rapport à la masse totale de composition,
- de 0,01 à 3 % d'acide polycarboxylique ou un de ses sels, ledit acide polycarboxylique comprenant de 2 à 4 groupes carboxyle par molécule; et
- de 97 à 99,99 % d'un clinker Belite-Calcium-Sulphoalumineux-Ferrite (clinker BCSAF) comprenant au moins en % exprimé en masse par rapport à la masse totale de clinker BCSAF
■ de 5 à 30 %, de phase aluminoferrite calcique d'une composition correspondant à la formule générale C₂AₓF₍₁₋ₓ₎, avec X compris de 0,2 à 0,8 ;
■ de 10 à 35 %, de phase sulfoaluminate de calcium « ye'elimite » C₄A₃$,
■ de 40 à 75 % de bélite (C₂S),
■ de 0,01 à 10 % d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%.

2. Composition selon la revendication 1 **caractérisée en ce qu'**elle comprend de 0,03 à 1 %, plus préférentiellement de 0,1 à 0,5 %, % en masse par rapport à la masse totale de composition.

3. Composition selon la revendication 1 ou 2 **caractérisée en ce qu'**elle comprend au moins un acide polycarboxylique ou un de ses sels choisi parmi l'acide citrique, l'acide malonique, l'acide malique, l'acide glutarique, l'acide adipique, l'acide oxalique, l'acide maléique, l'acide tartrique, l'acide succinique, l'acide ascorbique, l'acide glutamique ou leurs mélanges.

4. Composition selon la revendication 3 **caractérisée en ce qu'**elle comprend au moins un acide citrique ou un de ses sels.

5. Composition selon l'une des revendications 1 à 4 **caractérisée en ce qu'**elle comprend en outre une alkanolamine.

6. Composition selon l'une des revendications 1 à 5 **caractérisée en ce que** le clinker Belite-Calcium-Sulphoalumineux-Ferrite (clinker BCSAF) ne comprend pas de phase minéralogique C₃S.

7. Ciment comprenant au moins
- de 30 à 99,9 % d'une composition selon l'une des revendications 1 à 6; et
- de 0,1 à 40 % de sulfate de calcium, % en masse par rapport à la masse totale de ciment;
- de 0,1 à 70 % d'additions minérales, % en masse par rapport à la masse totale de ciment.

8. Ciment selon la revendication 7 **caractérisé en ce que** les additions minérales sont choisies parmi les laitiers (tels que définis dans la norme « Ciment » NF EN 197-1 paragraphe 5.2.2), les laitiers d'aciérie, les matériaux pouzzolaniques (tels que définis dans la norme « Ciment » NF EN 197-1 paragraphe 5.2.3), les cendres volantes (telles que définies dans la norme « Ciment » NF EN 197-1 paragraphe 5.2.4) ou les calcaires (tels que définis dans la norme « Ciment » NF EN 197-1 paragraphe 5.2.6), ou leurs mélanges.

9. Béton ou mortier comprenant au moins un ciment BCSAF et au moins un acide polycarboxylique ou un de ses sels, ledit acide polycarboxylique comprenant de 2 à 4 groupes carboxyle par molécule.

10. Utilisation d'au moins un acide polycarboxylique ou un de ses sels, ledit acide polycarboxylique comprenant de 2 à 4 groupes carboxyle par molécule, pour augmenter la résistance mécanique des ciments BCSAF après leur prise.

11. Utilisation selon la revendication 10 **caractérisée en ce que** ledit acide est présent dans l'eau de gâchage du ciment BCSAF.

12. Procédé de préparation d'un béton ou d'un mortier selon la revendication 9 comprenant une étape de mélange d'un ciment BCASF avec des granulats, de l'eau, au moins un acide polycarboxylique ou un de ses sels, ledit acide polycarboxylique comprenant de 2 à 4 groupes carboxyle par molécule, et éventuellement des additifs.

13. Eléments pour le domaine de la construction réalisés en utilisant le béton ou le mortier selon la revendication 9 ou le ciment selon l'une des revendications 7 ou 8.

## Patentansprüche

1. Zusammensetzung, umfassend mindestens, ausgedrückt in Masse-% bezogen auf die Gesamtmasse der Zusammensetzung,
- 0,01 bis 3 % Polycarbonsäure oder ihrer Salze, wobei die Polycarbonsäure 2 bis 4 Carbongruppen pro Molekül umfasst; und
- 97 bis 99,99 % eines Belit-Calcium-Sulphoaluminat-Ferrit-Klinkers (BCSAF-Klinker), umfassend mindestens, ausgedrückt in Masse-% bezogen auf die Gesamtmasse an BCSAF-Klinker
• 5 bis 30 % Calciumaluminoferritphase einer Zusammensetzung, die der allgemeinen Formel C₂AₓF₍₁₋ₓ₎ entspricht, wobei X von 0,2 bis 0,8 liegt;
• 10 bis 35 % Calciumsulphoaluminatphase "Ye'elimite" C₄A₃$,
• 40 bis 75 % Belit (C₂S),
• 0,01 bis 10 % einer oder mehrerer Nebenphasen, ausgewählt aus Calciumsulfaten, Alkalisulfaten, Perovskit, Gehlenit, freiem Kalk und Periklas und/oder einer Glasphase,
und wobei die Summe der rozentanteile dieser Phasen größer oder gleich 97 % ist.

2. Zusammensetzung nach Anspruch 1, **dadurch gekennzeichnet, dass** sie 0,03 bis 1 %, stärker bevorzugt 0,1 bis 0,5 %, Masse-% bezogen auf die Gesamtmasse der Zusammensetzung, umfasst.

3. Zusammensetzung nach Anspruch 1 oder 2, **dadurch gekennzeichnet, dass** sie mindestens eine Polycarbonsäure oder eines ihrer Salze umfasst, ausgewählt aus Citronensäure, Malonsäure, Äpfelsäure, Glutarsäure, Adipinsäure, Oxalsäure, Maleinsäure, Weinsäure, Bernsteinsäure, Ascorbinsäure, Glutaminsäure oder deren Gemischen.

4. Zusammensetzung nach Anspruch 3, **dadurch gekennzeichnet, dass** sie mindestens eine Citronensäure oder eines ihrer Salze umfasst.

5. Zusammensetzung nach einem der Ansprüche 1 bis 4, **dadurch gekennzeichnet, dass** sie ferner ein Alkanolamin umfasst.

6. Zusammensetzung nach einem der Ansprüche 1 bis 5, **dadurch gekennzeichnet, dass** der Belit-Calcium-Sulphoaluminat-Ferrit-Klinker (BCSAF-Klinker) keine mineralogische Phase C₃S umfasst.

7. Zement, umfassend mindestens
- 30 bis 99,9 % einer Zusammensetzung nach einem der Ansprüche 1 bis 6; und
- 0,1 bis 40 % Calciumsulfat, Masse-% bezogen auf die Gesamtmasse an Zement;
- 0,1 bis 70 % mineralische Zusätze, Masse-% bezogen auf die Gesamtmasse an Zement.

8. Zement nach Anspruch 7, **dadurch gekennzeichnet, dass** die mineralischen Zusätze ausgewählt sind aus Schlacken (wie in der Norm "Zement" NF EN 197-1, Absatz 5.2.2, definiert), Stahlwerksschlacken, puzzolanischen Materialien (wie in der Norm "Zement" NF EN 197-1, Absatz 5.2.3, definiert), Flugaschen (wie in der Norm "Zement" NF EN 197-1, Absatz 5.2.4, definiert) oder Kalksteinen (wie in der Norm "Zement" NF EN 197-1, Absatz 5.2.6, definiert) oder deren Gemischen.

9. Beton oder Mörtel, umfassend mindestens einen BCSAF-Zement und mindestens eine Polycarbonsäure oder eines ihrer Salze, wobei die Polycarbonsäure 2 bis 4 Carbongruppen pro Molekül umfasst.

10. Verwendung mindestens einer Polycarbonsäure oder eines ihrer Salze, wobei die Polycarbonsäure 2 bis 4 Carbongruppen pro Molekül umfasst, um die mechanische eständigkeit des BCSAF-Zements nach dessen Abbinden zu erhöhen.

11. Verwendung nach Anspruch 10, **dadurch gekennzeichnet, dass** die Säure im Anmachwasser des CSAF-Zements vorhanden ist.

12. Verfahren zur erstellung eines Betons oder eines Mörtels nach Anspruch 9, umfassend einen Schritt zum Mischen des BCASF-Zements mit Aggregaten, Wasser, mindestens einer Polycarbonsäure oder einem ihrer Salze, wobei die Polycarbonsäure 2 bis 4 Carbongruppen pro Molekül umfasst, und gegebenenfalls Zusatzstoffen.

13. Elemente für den Baubereich, die unter Verwendung des Betons oder des Mörtels nach Anspruch 9 oder des Zements nach einem der Ansprüche 7 oder 8 ausgeführt werden.

## Claims

1. Composition comprising at least, in % expressed by mass relative to the total mass of the composition,
- from 0.01 to 3% of polycarboxylic acid or one of the salts thereof, said polycarboxylic acid comprising 2 to 4 carboxyl groups per molecule; and
- from 97 to 99.99% of a Belite-Calcium-Sulphoaluminate-Ferrite clinker (BCSAF clinker) comprising at least, in % expressed by mass relative to the total mass of the BCSAF clinker,
• from 5 to 30% of calcium aluminoferrite phase with a composition corresponding to the general formula C₂AₓF₍₁₋ₓ₎, where X is from 0.2 to 0.8;
• from 10 to 35% of calcium sulphoaluminate phase "ye'elimite" C₄A₃$,
• from 40 to 75% of belite (C₂S),
• from 0.01 to 10% of one or more minor phases selected from among the calcium sulphates, the alkali metal sulphates, perovskite, gehlenite, free lime and periclase, and/or a vitreous phase,
the sum of the percentages of these phases being greater than or equal to 97%.

2. Composition according to claim 1, **characterised in that** it comprises from 0.03 to 1%, more preferably from 0.1 to 0.5%, in % by mass relative to the total mass of the composition.

3. Composition according to claim 1 or 2, **characterised in that** it comprises at least one polycarboxylic acid or one of the salts thereof selected from among citric acid, malonic acid, malic acid, glutaric acid, adipic acid, oxalic acid, maleic acid, tartaric acid, succinic acid, ascorbic acid, glutamic acid or the mixtures thereof.

4. Composition according to claim 3, **characterised in that** it comprises at least one citric acid or one of the salts thereof.

5. Composition according to one of claims 1 to 4, **characterised in that** it further comprises an alkanolamine.

6. Composition according to one of claims 1 to 5, **characterised in that** the Belite-Calcium-Sulphoaluminate-Ferrite clinker (BCSAF clinker) contains no mineralogical phase C₃S.

7. Cement, comprising at least
- from 30 to 99.9% of a composition according to one of claims 1 to 6; and
- from 0.1 to 40% of calcium sulphate, in % by mass relative to the total mass of cement;
- from 0.1 to 70% of mineral additives, in % by mass relative to the total mass of cement.

8. Cement according to claim 7, **characterised in that** the mineral additions are selected from among the slags (as defined in the standard "Cement" NF EN 197-1 paragraph 5.2.2), steelworks slags, pozzolanic materials (as defined in the standard "Cement" NF EN 197-1 paragraph 5.2.3), fly ash (as defined in the standard "Cement" NF EN 197-1 paragraph 5.2.4) or calcareous materials (as defined in the standard "Cement" NF EN 197-1 paragraph 5.2.6), or the mixtures thereof.

9. Concrete or mortar comprising at least one BCSAF cement and at least one polycarboxylic acid or one of the salts thereof, said polycarboxylic acid comprising from 2 to 4 carboxyl groups per molecule.

10. Use of at least one polycarboxylic acid or one of the salts thereof, said polycarboxylic acid comprising from 2 to 4 carboxyl groups per molecule, for increasing the mechanical strength of BCSAF cements after setting.

11. Use according to claim 10, **characterised in that** said acid is present in the mixing water of the BCSAF cement.

12. Process for preparing a concrete or a mortar according to claim 9, comprising a step of mixing a BCSAF cement with aggregates, water, at least one polycarboxylic acid or one of the salts thereof, said polycarboxylic acid comprising 2 to 4 carboxyl groups per molecule, and optionally additives.

13. Articles for the construction field produced using the concrete or the mortar according to claim 9 or the cement according to one of claims 7 or 8.
